# EUROPEAN PATENT APPLICATION

(11) **EP 2 455 847 A1**
(43) Date of publication of application: **23.05.2012**
(21) Application number: 11184813.1
(22) Date of filing: 12.10.2011
(51) Int. Cl.: G06F 3/048

(54) **Touch-controlled device and method for displaying a virtual keyboard on the touch-controlled device thereof**

(30) Priority: 22.11.2010 US 415870 P; 11.05.2011 TW 100116474
(71) Applicant: Acer Incorporated, New Taipei City 221 (TW)
(72) Inventor: Lin, Shao-Chieh, New Taipei City 221 (TW); Lin, Chih-Hsiang, New Taipei City 221 (TW); Dai, Han-Yu, New Taipei City 221 (TW)
(74) Representative: Becker Kurig Straus

(57) **Abstract**

A touch-controlled device (100, 200) includes a touch panel (110), a recognition module (120, 220), and a control unit (1 30). The touch panel (1 10) is arranged for generating a touch signal according to a plurality of blocks on the touch panel (110) triggered by a gesture, and for displaying images. The recognition module (120, 220) is coupled to the touch panel (110), and is arranged for recognizing a designated type of the gesture according to the touch signal. The control unit (1 30) is coupled to the touch panel (1 10) and the recognition module (120, 220), and is arranged for triggering and displaying a virtual keyboard on the touch panel (110) according to the designated type.

## Description

### Field of the Invention

The present invention relates to a touch-controlled device and a related method for detecting a designated type of gesture acted on the touch-controlled device in order to display a virtual keyboard on a touch panel of the touch-controlled device according to the pre-characterizing clauses of claims 1 and 7.

### Background of the Invention

With developments of science and technology, touch-controlled devices have become more and more popular, and the design of the user interface (UI) of the touch-controlled devices plays an increasingly important role. However, manipulation gestures recognized by the touch-controlled devices at present are mostly a single-fingered gesture or a two-fingered gesture, and thus variations of the manipulation gestures are limited. Take the Microsoft operating system as an example, a gesture must be applied to the user interface of the Microsoft operating system if a user wants to trigger a function by using the gesture. Furthermore, the user cannot trigger the function corresponding to the gesture at any time. For example, a virtual keyboard does not need to be used all of the time, that is to say, the virtual keyboard must appear only when it is needed and can be hidden when it is not in use. Most importantly, the virtual keyboard should be triggered and displayed using a simple and intuitive manner.

Hence, triggering and displaying the virtual keyboard by using a simple and intuitive gesture, and automatically adjusting the appearance of the virtual keyboard in accordance with the characteristics of the gesture have become an important topic in this field.

### Summary of the Invention

This in mind, the present invention aims at providing a touch-controlled device and a related method for detecting a designated type of a gesture acted on the touch-controlled device in order to display a virtual keyboard on a touch panel of the touch-controlled device.

This is achieved by a touch-controlled device and a related method for detecting a designated type of a gesture acted on the touch-controlled device according to claims 1 and 7. The dependent claims pertain to corresponding further developments and improvements.

As will be seen more clearly from the detailed description following below, the claimed touch-controlled device may include a touch panel, a recognition module, and a control unit. The touch panel is arranged for generating a touch signal according to a plurality of blocks on the touch panel triggered by a gesture, and for displaying images. The recognition module is coupled to the touch panel, and is arranged for recognizing a designated type of gesture according to the touch signal. The control unit is coupled to the touch panel and the recognition module, and is arranged for triggering and displaying a virtual keyboard on the touch panel according to the designated type.

In addition, as will be seen more clearly from the detailed description following below, the claimed method includes the following steps: generating a touch signal according to a plurality of blocks on the touch panel triggered by a gesture; recognizing a designated type of the gesture according to the touch signal; and triggering and displaying a virtual keyboard on the touch panel according to the designated type.

In summary, a touch-controlled device and a related method for detecting a designated type of gesture acted on the touch-controlled device in order to display a virtual keyboard on a touch panel of the touch-controlled device are provided in the present invention. By using a simple and intuitive gesture and the characteristic value(s) of the gesture, the appearance of the virtual keyboard can be automatically adjusted in order to allow the user to use the virtual keyboard more easily. Furthermore, another advantage of the present invention is to adjust the display mode of the virtual keyboard in accordance with different characteristic values of the gestures of different users.

### Brief Description of the Drawings

In the following, the invention is further illustrated by way of example, taking reference to the accompanying drawings. Thereof
FIG. 1 is a diagram illustrating a touch-controlled device according to a first embodiment of the present invention;
FIG. 2 is a diagram illustrating a touch-controlled device according to a second embodiment of the present invention;
FIGs. 3-5 illustrate how the determining unit determines the designated type of gesture according to a plurality of shapes according to an embodiment of the present invention;
FIGs. 6-8 illustrate that the designated type of gesture is determined as a wrist type;
FIG. 9 is a diagram illustrating how the analyzing unit generates at least one characteristic value according to the plurality of shapes and the designated type;
FIG. 10 is a flowchart illustrating a method for displaying a virtual keyboard on a touch-controlled device according to an exemplary embodiment of the present invention; and
FIG. 11 is a flowchart illustrating a method for displaying a virtual keyboard on a touch-controlled device according to another exemplary embodiment of the present invention.

### Detailed Description

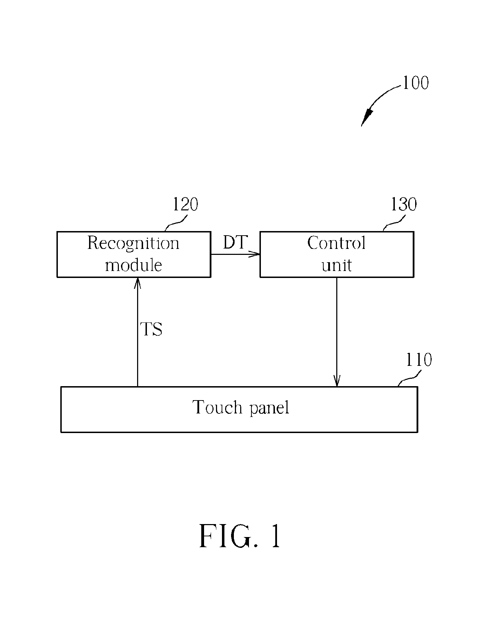

Please refer to FIG. 1. FIG. 1 is a diagram illustrating a touch-controlled device 100 according to a first embodiment of the present invention. As shown in FIG. 1, the touch-controlled device 100 may include, but is not limited to, a touch panel 110, a recognition module 120, and a control unit. The touch-controlled device 100 may be implemented by a table PC or a notebook, but the present is not limited to this only. In addition, the touch panel 1 10 is arranged for generating a touch signal TS according to a plurality of blocks on the touch panel 1 10 triggered by a gesture. The gesture can be implemented by a single-hand gesture or a two-hand gesture, but this in no way should be considered as a limitation of the present invention. Furthermore, in this embodiment, the touch panel 1 10 may further have a display function and be used for displaying images. For example, a display panel and a touch element can be combined together in order to implement the touch panel 110, but the present invention is not limited to this only.

The recognition module 120 is coupled to the touch panel 110, and is arranged for recognizing a designated type DT of the gesture according to the touch signal TS. For example, the designated type DT of the gesture may be a wrist type, a finger type, or a finger-and-wrist type, but this in no way should be considered as a limitation of the present invention.

Furthermore, the control unit 1 30 is coupled to the touch panel 1 10 and the recognition module 120, and is arranged for triggering and displaying a virtual keyboard on the touch panel 1 10 according to the designated type DT. That is to say, the virtual keyboard on the touch panel 100 can be changed from a hidden status to a displayed status using the gesture.

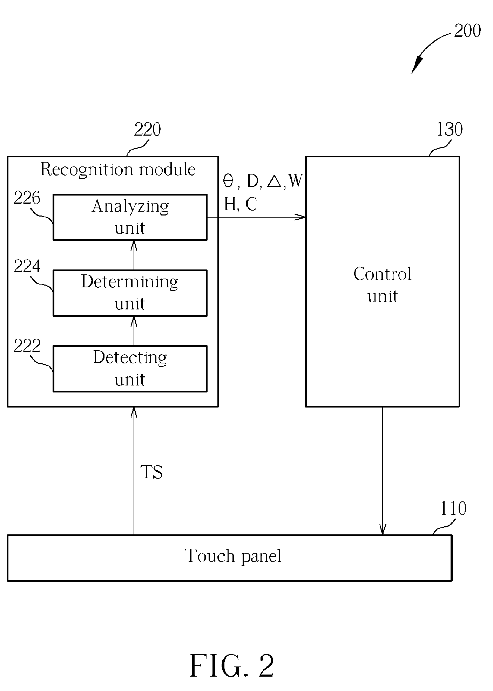

Please refer to FIG. 2. FIG. 2 is a diagram illustrating a touch-controlled device 200 according to a second embodiment of the present invention. The architecture of the touch-controlled device 100 shown in FIG. 1 is similar to that of the touch-controlled device 200 shown in FIG. 2, and the difference between them is that the recognition module 220 of the touch-controlled device 200 may include a detecting unit 222, a determining unit 224, and an analyzing unit 226. The detecting unit 222 is arranged for detecting a plurality of shapes respectively corresponding to the plurality of blocks triggered by the gesture according to the touch signal TS, wherein each block corresponds to a plurality of cells. The determining unit 224 is coupled to the detecting unit 222, and is arranged for determining the designated type DT of the gesture according to the plurality of shapes. For example, the determining unit 224 may determine that the designated type DT of the gesture as a wrist type, a finger type, or a finger-and-wrist type according to the plurality of shapes.

In addition, the analyzing unit 226 is coupled to the determining unit 224, and is arranged for generating at least one characteristic value according to the plurality of shapes and the designated type DT, wherein the at least one characteristic value generated by the analyzing unit 226 may include at least one of an opening angle *θ* of a wrist, a left-right distance D of the wrist, a gesture angle Δ of the wrist related to the touch panel 1 10, a maximum width W of the gesture, a maximum height H of the gesture, and a center position C of the gesture. Please note that, after the at least one characteristic value is generated by the analyzing unit 226 according to the plurality of shapes and the designated type DT, the control unit 1 30 can adjust a display position of the virtual keyboard and a button size of the virtual keyboard according to at least one of the opening angle *θ* of the wrist, the left-right distance D of the wrist, the gesture angle Δ of the wrist related to the touch panel 110, the maximum width W of the gesture, the maximum height H of the gesture, and the center position C of the gesture.

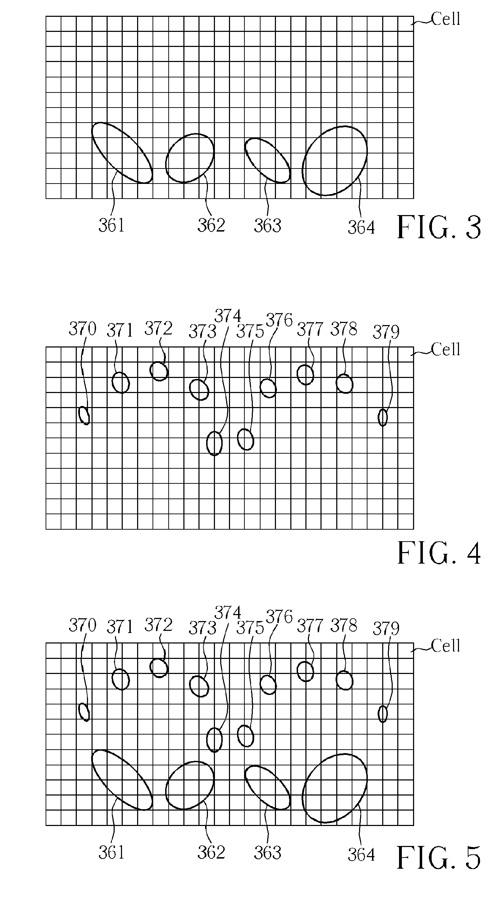

First, an example is cited for illustrating how the determining unit 224 determines the designated type DT of the gesture according to the plurality of shapes. Please refer to FIGs. 3-5. FIGs. 3-5 illustrate how the determining unit determines the designated type DT of the gesture according to a plurality of shapes according to an embodiment of the present invention, wherein FIG. 3 shows that the designated type DT of the gesture is a wrist type, FIG. 4 shows that the designated type DT of the gesture is a finger type, and FIG. 5 shows that the designated type DT of the gesture is a finger-and-wrist type. If the detecting unit 222 detects that the plurality of shapes respectively corresponding to the plurality of blocks triggered by the gesture according to touch signal TS are four ellipses 361~364 shown in the FIG. 3, the determining unit 224 then determines that the designated type DT of the gesture is a wrist type. If the detecting unit 222 detects that the plurality of shapes respectively corresponding to the plurality of blocks triggered by the gesture according to the touch signal TS are ten ellipses 370~379 shown in FIG. 4, the determining unit 224 then determines that the designated type DT of the gesture is a finger type. If the detecting unit 222 detects that the plurality of shapes respectively corresponding to the plurality of blocks triggered by the gesture according to the touch signal TS are the four ellipses 361~364 and the ten ellipses 370~379 shown in FIG. 5, the determining unit 224 then determines that the designated type DT of the gesture is a finger-and-wrist type. Please note that the ellipses of the plurality of shapes and the number of the ellipses are not limitations of the present invention, any shape and any number of the plurality of shapes capable of determining the designated type DT as the finger type, the wrist type, or the finger-and-wrist type all belong to the scope of the present disclosure.

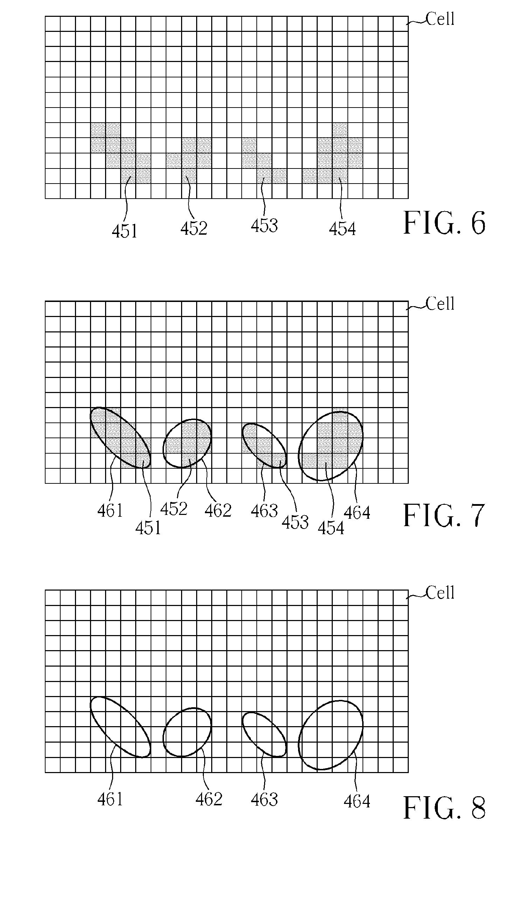

Next, another example is cited for illustrating the operations related to the touch-controlled device 200 of the present invention. Please refer to FIGs. 6-8. FIGs. 6-8 illustrate that the designated type DT of the gesture is determined as a wrist type. FIG. 6 shows that a user triggers and displays the virtual keyboard by using a wrist touched on the touch panel 1 10; for this reason, a touch signal TS corresponding to a plurality of blocks 451~454 is generated by the touch panel 110. Please note that, there are cells on the touch panel 1 10, that is to say, each block is corresponding to a plurality of cells. After that, as shown in FIG. 7, the detecting unit 222 detects that the plurality of blocks 451~454 triggered by the gesture according to the touch signal TS are respectively corresponding to the four ellipses 361 -364, that is to say, the plurality of blocks 451~454 will be simplified as the four ellipses 461~464 shown in FIG. 8 by the detecting unit 222, and the determining unit 224 can determine the designated type DT of the gesture as the wrist type according to the four ellipse 461~464. Finally, the analyzing unit 226 generates at least one characteristic value (such as, an opening angle *θ* of a wrist, a left-right distance D of the wrist, a gesture angle Δ of the wrist related to the touch panel 110) according to the four ellipses 461~464 and the wrist type.

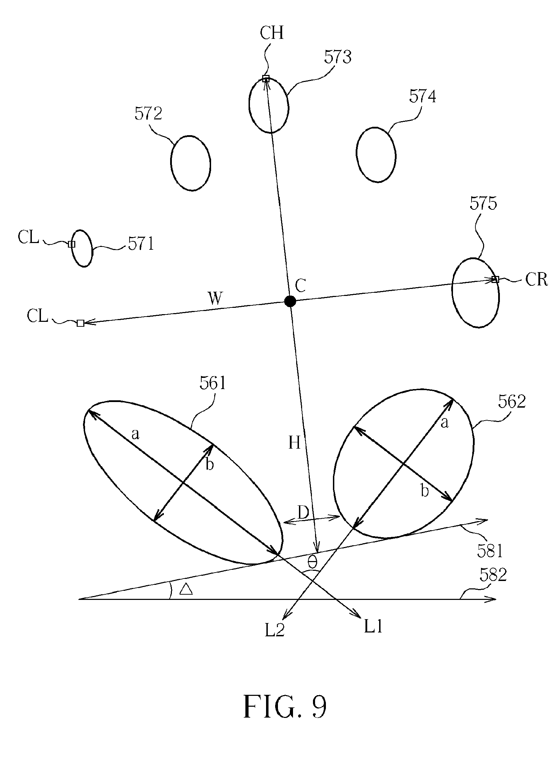

In the following, another example is cited for illustrating how the analyzing unit 226 generates at least one characteristic value according to the plurality of shapes and the designated type DT. Please refer to FIG. 9. FIG. 9 is a diagram illustrating how the analyzing unit 226 generates at least one characteristic value according to the plurality of shapes and the designated type DT. A plurality of ellipses 561 , 562, and 571~575 are shown in FIG. 9. First, the determining unit 224 determines that the designated type DT of the gesture is the wrist type according to the first ellipse 561 and the second ellipse 562 of the plurality of shapes, and the analyzing unit 226 calculates the opening angle *θ* of the wrist according to a first major axis L1 of the first ellipse 561 and a second major axis L2 of the second ellipse 562. In addition, the analyzing unit 226 may calculate the left-right distance D of the wrist according to a closest distance between the first ellipse 561 and the second ellipse 562. Moreover, the analyzing unit 226 may calculate the gesture angle Δ of the wrist related to the touch panel according to the first ellipse and the second ellipse. Please note that, the gesture angle Δ represents an induced angle formed by a connecting wire 581 of the first ellipse 561 and the second ellipse 562 and a lower edge of the touch panel 1 10.

Furthermore, when the determining unit 224 determines that the designated type DT of the gesture is the finger type according to the plurality of ellipses 571~575 of the plurality of shapes, the analyzing unit 226 may calculate a left-most cell CL and a right-most cell CR of the gesture according to the plurality of ellipses 571~575 in order to determine the maximum width W of the gesture. When the determining unit 224 determines that the designated type DT of the gesture is the finger type according to the plurality of ellipses 571~575 of the plurality of shapes, the analyzing unit 226 may calculate a topmost cell CH of the gesture according to the plurality of ellipses 571~575 in order to determine the maximum height H of the gesture. When the determining unit 224 determines that the designated type DT of the gesture is the finger type according to the plurality of ellipses 571~575 of the plurality of shapes, the analyzing unit 226 may calculate a center cell of the gesture according to the plurality of ellipses 571~575 in order to determine the center position C of the gesture. The abovementioned features of generating the at least one characteristic value, by the analyzing unit 226, according to the plurality of shapes and the designated type DT are merely embodiments for illustrating the present invention, and in no way should be considered as a limitation of the present invention.

Please note that, the control unit 1 30 may further adjust a display position of the virtual keyboard and a button size of the virtual keyboard according to the at least one characteristic value. In other words, the abovementioned at least one characteristic value can be used for determining the palm size/angle or finger size/angle of the user in order to adjust the display manner of the virtual keyboard. For example, the button size (the width and the height), the button distance (the x-axis direction and the Y-axis direction), the keyboard angle, the keyboard shape, and/or the keyboard position can be adjusted.

For example, if the at least one characteristic value (such as, the opening angle *θ* of the wrist, the left-right distance D of the wrist, and the maximum width W of the gesture) has a larger value, the mechanism of the present invention can adjust the virtual keyboard to have a wider button and a larger key pitch (the Y-axis direction). If the at least one characteristic value (such as, the opening angle *θ* of the wrist and the maximum height H of the gesture) has a larger value, the mechanism of the present invention can adjust the virtual keyboard to have a higher button and a larger key pitch (the X-axis direction). In addition, if the virtual keyboard is displayed on a large-scale touch-controlled device, the mechanism of the present invention can adjust the display position of the virtual keyboard and its angle according to the at least one characteristic value (such as, a center position C of the gesture and the gesture angle Δ of the wrist). Therefore, when multiple users share the touch-controlled device, the mechanism of the present invention can adjust the display manner of the virtual keyboard based on different characteristics of gestures of different users.

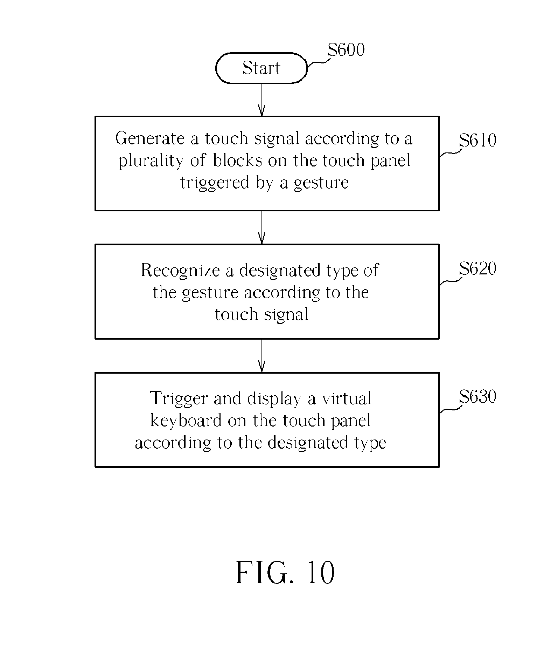

Please refer to FIG. 10. FIG. 10 is a flowchart illustrating a method for displaying a virtual keyboard on a touch-controlled device according to an exemplary embodiment of the present invention. Please note that the following steps are not limited to be performed according to the exact sequence shown in FIG. 9 if a roughly identical result can be obtained. The method may include, but is not limited to, the following steps:
Step S600: Start.
Step S61 0: Generate a touch signal according to a plurality of blocks on the touch panel triggered by a gesture.
Step S620: Recognize a designated type of the gesture according to the touch signal.
Step S630: Trigger and display a virtual keyboard on the touch panel according to the designated type.

Those skilled in the art can readily understand the details and variations how each element operates by combining the steps shown in FIG. 9 and the elements of the touch-controlled device 100 shown in FIG.1 stated above, and further description is omitted here for brevity.

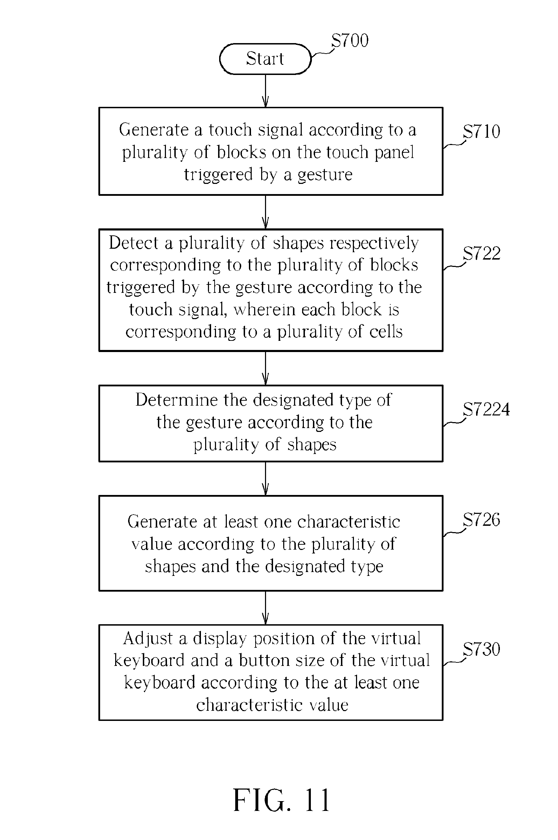

Please refer to FIG. 11. FIG. 11 is a flowchart illustrating a method for displaying a virtual keyboard on a touch-controlled device according to another exemplary embodiment of the present invention. Please note that the following steps are not limited to be performed according to the exact sequence shown in FIG. 11 if a roughly identical result can be obtained. The method may include, but is not limited to, the following steps:
Step S700: Start.
Step S71 0: Generate a touch signal according to a plurality of blocks on the touch panel triggered by a gesture.
Step S722: Detect a plurality of shapes respectively corresponding to the plurality of blocks triggered by the gesture according to the touch signal, wherein each block corresponds to a plurality of cells.
Step S724: Determine the designated type of the gesture according to the plurality of shapes.
Step S726: Generate at least one characteristic value according to the plurality of shapes and the designated type.
Step S730: Adjust a display position of the virtual keyboard and a button size of the virtual keyboard according to the at least one characteristic value.

Those skilled in the art can readily understand the details and variations how each element operates by combining the steps shown in FIG. 11 and the elements of the touch-controlled device 200 shown in FIG.2 stated above, and further description is omitted here for brevity.

Please note that, the steps of the abovementioned flowcharts are merely practicable embodiments of the present invention, and in no way should be considered to be limitations of the scope of the present invention. These methods can include other intermediate steps or several steps can be merged into a single step.

In summary, a touch-controlled device and a related method for detecting a designated type of a gesture acted on the touch-controlled device in order to display a virtual keyboard on a touch panel of the touch-controlled device are provided in the present invention. By using such a mechanism of the present invention, the user can not only trigger the virtual keyboard by using a simple and intuitive gesture, but also can adjust the display mode of the virtual keyboard in accordance with different postures and different hand sizes of the user.

All combinations and sub-combinations of above-described features also belong to the invention.

## Claims

1. A touch-controlled device (100, 200), comprising:
a touch panel (110), arranged for generating a touch signal according to a plurality of blocks on the touch panel (1 10) triggered by a gesture, and for displaying images;
**characterized by**:
a recognition module (120, 220), coupled to the touch panel (1 10), arranged for recognizing a designated type of the gesture according to the touch signal; and
a control unit (1 30), coupled to the touch panel (1 10) and the recognition module (1 20), arranged for triggering and displaying a virtual keyboard on the touch panel (110) according to the designated type.

2. The touch-controlled device (100, 200) according to claim 1, **characterized in that** the recognition module (220) comprises:
a detecting unit (222), arranged for detecting a plurality of shapes
respectively corresponding to the plurality of blocks triggered by the gesture according to the touch signal, wherein each block corresponds to a plurality of cells;
a determining unit (224), coupled to the detecting unit (222), arranged
for determining the designated type of the gesture according to the plurality of shapes; and
an analyzing unit (226), coupled to the determining unit (224),
arranged for generating at least one characteristic value according to the plurality of shapes and the designated type.

3. The touch-controlled device (100, 200) according to claim 2, **characterized in that** the determining unit (224) is arranged for determining that the designated type of the gesture as a wrist type, a finger type, or a finger-and-wrist type according to the plurality of shapes, and the at least one characteristic value comprises at least one of an opening angle of a wrist, a left-right distance of the wrist, a gesture angle of the wrist related to the touch panel (110), a maximum width of the gesture, a maximum height of the gesture, and a center position of the gesture.

4. The touch-controlled device (100, 200) according to claim 3, **characterized in that**:
the determining unit (224) is arranged for determining that the
designated type of the gesture as the wrist type or the finger-and-wrist type according to a first ellipse and a second ellipse of the plurality of shapes;
the analyzing unit (226) is arranged for calculating the opening angle
of the wrist according to a first major axis of the first ellipse and a second major axis of the second ellipse;
the analyzing unit (226) is arranged for calculating the left-right
distance of the wrist according to a closest distance between the first ellipse and the second ellipse; and
the analyzing unit (226) is arranged for calculating the gesture angle
of the wrist related to the touch panel (110) according to the first ellipse and the second ellipse.

5. The touch-controlled device (100, 200) according to claim 3, **characterized in that**:
when the determining unit (224) determines that the designated type
of the gesture as the finger type or the finger-and-wrist type according to a plurality of ellipses of the plurality of shapes, the analyzing unit (226) is arranged for calculating a left-most cell and a right-most cell of the gesture according to the plurality of ellipses in order to determine the maximum width of the gesture;
when the determining unit (224) determines that the designated type
of the gesture as the finger type or the finger-and-wrist type according to a plurality of ellipses of the plurality of shapes, the analyzing unit (226) is arranged for calculating a topmost cell of the gesture according to the plurality of ellipses in order to determine the maximum height of the gesture; or
when the determining unit (224) determines that the designated type
of the gesture as the finger type or the finger-and-wrist type according to a plurality of ellipses of the plurality of shapes, the analyzing unit (226) is arranged for calculating a center cell of the gesture according to the plurality of ellipses in order to determine the center position of the gesture.

6. The touch-controlled device (100, 200) according to claim 2, **characterized in that** the control unit (1 30) is further arranged for adjusting a display position of the virtual keyboard and a button size of the virtual keyboard according to the at least one characteristic value.

7. A method for displaying a virtual keyboard on a touch-controlled device (100, 200), the touch-controlled device (100, 200) having a touch panel (1 10) for displaying images, the method comprising the following steps:
generating a touch signal according to a plurality of blocks on the
touch panel (110) triggered by a gesture;
**characterized by**:
recognizing a designated type of the gesture according to the touch
signal; and
triggering and displaying a virtual keyboard on the touch panel (1 10)
according to the designated type.

8. The method according to claim 7, **characterized in that** the step of recognizing the designated type of the gesture according to the touch signal comprises:
detecting a plurality of shapes respectively corresponding to the
plurality of blocks triggered by the gesture according to the touch signal, wherein each block corresponds to a plurality of cells;
determining the designated type of the gesture according to the
plurality of shapes; and
generating at least one characteristic value according to the plurality of shapes and the designated type.

9. The method according to claim 8, **characterized in that** the designated type of the gesture comprises a wrist type, a finger type, or a finger-and-wrist type; and the at least one characteristic value comprises at least one of an opening angle of a wrist, a left-right distance of the wrist, a gesture angle of the wrist related to the touch panel (110), a maximum width of the gesture, a maximum height of the gesture, and a center position of the gesture.

10. The method according to claim 9, **characterized in that** the step of determining the designated type of the gesture according to the plurality of shapes comprises:
determining the designated type of the gesture as the wrist type or the
finger-and-wrist type according to a first ellipse and a second ellipse of the plurality of shapes; and
the step of generating the at least one characteristic value according
to the plurality of shapes and the designated type comprises calculating the opening angle of the wrist according to a first major axis of the first ellipse and a second major axis of the second ellipse.

11. The method according to claim 9, **characterized in that** the step of determining the designated type of the gesture according to the plurality of shapes comprises:
determining that the designated type of the gesture as the wrist type
or the finger-and-wrist type according to a first ellipse and a second ellipse of the plurality of shapes; and
the step of generating the at least one characteristic value according
to the plurality of shapes and the designated type comprises calculating the left-right distance of the wrist according to a closest distance between the first ellipse and the second ellipse.

12. The method according to claim 9, **characterized in that** the step of determining the designated type of the gesture according to the plurality of shapes comprises:
determining that the designated type of the gesture as the wrist type
or the finger-and-wrist type according to a first ellipse and a second ellipse of the plurality of shapes; and
the step of generating the at least one characteristic value according
to the plurality of shapes and the designated type comprises calculating the gesture angle of the wrist related to the touch panel (1 10) according to the first ellipse and the second ellipse.

13. The method according to claim 9, **characterized in that** the step of determining the designated type of the gesture according to the plurality of shapes comprises:
determining that the designated type of the gesture as the finger type
or the finger-and-wrist type according to a plurality of ellipses of the plurality of shapes; and
the step of generating the at least one characteristic value according
to the plurality of shapes and the designated type comprises:
calculating a left-most cell and a right-most cell of the gesture
according to the plurality of ellipses in order to determine the maximum width of the gesture;
calculating a topmost cell of the gesture according to the plurality
of ellipses in order to determine the maximum height of the gesture; or
calculating a center cell of the gesture according to the plurality of
ellipses in order to determine the center position of the gesture.

14. The method according to claim 8, **characterized in that** the step of triggering and displaying the virtual keyboard on the touch panel (1 10) according to the designated type comprises:
adjusting a display position of the virtual keyboard and a button size
of the virtual keyboard according to the at least one characteristic value.
